# FASCICULE DE BREVET EUROPEEN

(11) **EP 3 046 791 B1**
(45) Date de publication et mention de la délivrance du brevet: **06.11.2019**
(21) Numéro de dépôt: 14793207.3
(22) Date de dépôt: 12.09.2014
(51) Int. Cl.: B60J 5/06, B62D 25/02

(54) **AGENCEMENT POUR VÉHICULE AUTOMOBILE LIMITANT LE PORTE À FAUX D'UNE PORTE LATÉRALE COULISSANTE DUDIT VÉHICULE**
KRAFTFAHRZEUGANORDNUNG ZUR BEGRENZUNG DES ÜBERHANGS EINER SEITLICHEN SCHIEBETÜR DES BESAGTEN FAHRZEUGS
MOTOR VEHICLE ARRANGEMENT THAT LIMITS THE OVERHANG OF A SLIDING SIDE DOOR OF SAID VEHICLE

(30) Priorité: 20.09.2013 FR 1359078
(43) Date de publication de la demande: 27.07.2016
(73) Titulaire: Renault S.A.S., 92100 Boulogne-Billancourt (FR)
(72) Inventeur: POULLARD, Christophe, F-78640 Neauphle Le Vieux (FR)
(86) Numéro de dépôt international: PCT/FR2014/052276
(87) Numéro de publication internationale: WO 2015/040314

(56) Documents cités:
- WO-A1-2013/105462
- JP-A- H0 315 272
- JP-A- S57 140 483
- JP-U- S55 179 920
- US-A1- 2012 187 716

## Description

### Domaine technique de l'invention

L'invention concerne le domaine de l'automobile, notamment du véhicule automobile à porte latérale coulissante.

L'invention a pour objet plus particulièrement un agencement pour véhicule automobile destiné à permettre le coulissement d'une porte latérale du véhicule, ledit agencement comportant : un rail destiné au guidage du coulissement de la porte latérale du véhicule ; une doublure latérale de caisse ; une peau latérale de caisse montée sur la doublure latérale de caisse et munie d'un logement dans lequel le rail est monté.

Un autre objet de l'invention concerne un véhicule automobile comprenant un tel agencement.

### État de la technique

Dans le domaine des véhicules automobiles, il existe des portes dîtes coulissantes. Une porte coulissante est apte à varier entre une configuration d'ouverture et une configuration de fermeture par translation le long d'un rail de coulissement encastré dans la carrosserie du véhicule.

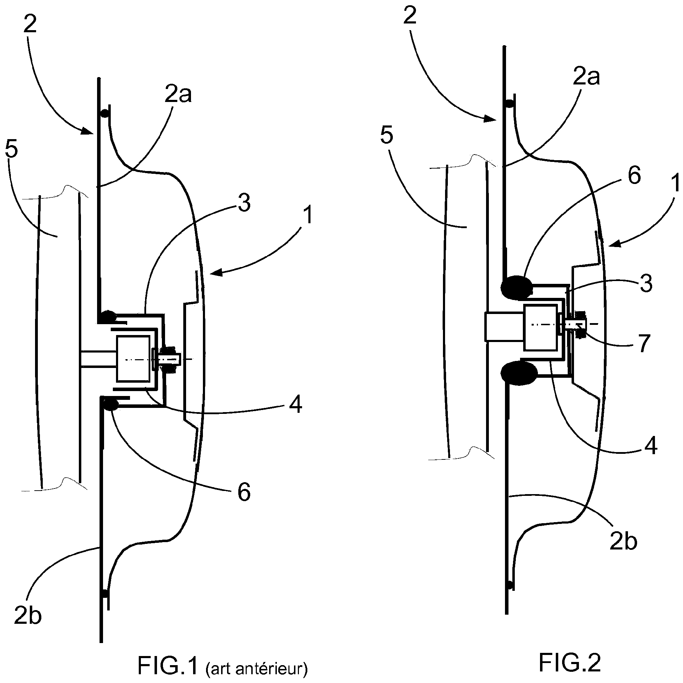

De manière générale, il est connu, comme l'illustre la figure 1, l'utilisation d'une doublure latérale 1 de caisse sur laquelle est assemblée une peau latérale 2 de caisse. La peau latérale 2 de caisse comporte un logement 3 longitudinal dans lequel est monté un rail 4. Le rail 4 est fixé uniquement à la peau latérale 2 de caisse. Il existe alors un porte à faux important lorsque la porte latérale 5 coulisse le long du rail 4. Ce porte à faux est maximal lorsque la porte latérale 5 est en configuration de fermeture. Il en résulte une problématique d'endurance du véhicule du fait de l'apparition de fissures dans la tôle de la peau latérale 2 de caisse et de rupture de points de soudure permettant de fixer le logement 3 au reste de la peau latérale 2 de caisse ou de rupture de mastic servant à l'étanchéité pour répondre aux exigences anti-corrosion. Cette problématique est exacerbée lorsque la peau latérale 2 de caisse est divisée en trois parties formées respectivement par une partie inférieure 2b, une partie supérieure 2a et le logement 3 disposé à l'interface des parties inférieure et supérieure et fixé à ces dernières par des points de soudure.

Il est connu de l'état de l'art d'utiliser des systèmes de cales pour limiter le porte à faux de la porte coulissante afin de soulager le rail.

Le document WO 2013/105462 A1 divulgue une porte latérale coulissante du véhicule.

### Objet de l'invention

Le but de la présente invention est de proposer une solution qui remédie aux inconvénients listés ci-dessus.

Selon l'invention, un agencement pour véhicule automobile est destiné à permettre le coulissement d'une porte latérale du véhicule. L'agencement comporte :
- un rail destiné au guidage du coulissement de la porte latérale du véhicule,
- une doublure latérale de caisse, et
- une peau latérale de caisse montée sur la doublure latérale de caisse et munie d'un logement dans lequel le rail est monté.

L'agencement comporte un organe de fixation du logement sur la doublure latérale de caisse, cet organe de fixation coopérant à la fois avec le rail, le logement et la doublure latérale de caisse.

La doublure latérale de caisse comporte un renfort de pied arrière du véhicule, ledit organe de fixation coopérant avec le renfort de pied arrière pour assurer la fixation dudit logement.

L'organe de fixation traverse une première ouverture formée dans le rail, une deuxième ouverture formée dans un fond du logement et une troisième ouverture formée dans le renfort de pied arrière.

L'organe de fixation peut comporter un boulon assurant un serrage concomitant du rail, du logement et de la doublure latérale de caisse au niveau des première, deuxième et troisième ouvertures.

Le boulon peut comporter un écrou soudé sur une face de la doublure latérale de caisse opposée à la peau latérale de caisse.

L'organe de fixation peut être disposé au niveau d'une extrémité du logement ou du rail qui se trouve la plus proche d'une ouverture destinée à être obturée par la porte latérale dans sa configuration de fermeture.

La peau latérale de caisse peut comporter une partie inférieure et une partie supérieure séparées par le logement du rail, le logement du rail étant solidaire respectivement des parties inférieure et supérieure par l'intermédiaire d'un élément de liaison.

Selon l'invention, un véhicule automobile comprend un agencement défini précédemment.

L'agencement peut comporter une interface avec l'arrière du véhicule et s'étendre en direction de l'avant du véhicule de sorte que le rail soit allongé selon la direction longitudinale du véhicule.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en coupe d'une solution selon l'art antérieur,
- la figure 2 est une vue en coupe d'un agencement selon un mode d'exécution particulier de l'invention,
- la figure 3 illustre une vue éclatée de l'agencement selon une réalisation de l'invention,
- la figure 4 illustre une autre vue éclatée dans laquelle la doublure latérale de caisse et la peau latérale de caisse sont chacune assemblées,
- la figure 5 illustre en perspective un agencement selon un mode d'exécution de l'invention dans lequel le rail a été retiré,
- la figure 6 illustre une vue en coupe selon A-A de la figure 5,
- la figure 7 illustre la figure 5 avec la présence du rail,
- la figure 8 illustre une vue en coupe selon B-B de la figure 7.

### Description de modes préférentiels de l'invention

L'agencement décrit ci-après diffère de l'art antérieur en ce qu'il comporte des moyens permettant d'améliorer la rigidité, notamment au niveau du rail de coulissement de la porte.

En ce sens, la figure 2 illustre un agencement pour véhicule automobile destiné à permettre le coulissement d'une porte latérale du véhicule 5. Cet agencement comporte un rail 4 destiné au guidage du coulissement de la porte latérale 5 du véhicule. La porte latérale peut alors être aussi appelée porte latérale coulissante. Bien que ce rail serve principalement au guidage il reprend une partie des efforts de la porte latérale 5 lorsque cette dernière est en configuration d'ouverture, de fermeture ou encore lorsqu'elle varie entre la configuration d'ouverture et la configuration de fermeture. En outre, l'agencement comporte une doublure latérale 1 de caisse, et une peau latérale 2 de caisse montée sur la doublure latérale de caisse et munie d'un logement 3 dans lequel le rail 4 est monté. Afin d'assurer une meilleure reprise des efforts et donc de limiter l'endommagement de la peau latérale 2 de caisse, l'agencement comporte un organe de fixation 7 du logement 3 sur la doublure latérale de caisse 1.

Le logement 3 peut former une cavité (ou rainure) de la peau latérale 2 de caisse de sorte à permettre l'encastrement du rail 4 dans ladite peau latérale 2 de caisse. En particulier, l'architecture de l'agencement est considérée comme de type à rail central, c'est-à-dire que le rail 4 est disposé entre une partie inférieure et une partie supérieure de la peau latérale 2 de caisse séparées par le logement 3. De préférence, le logement 3 est disposé de sorte à se retrouver à mi-hauteur du véhicule.

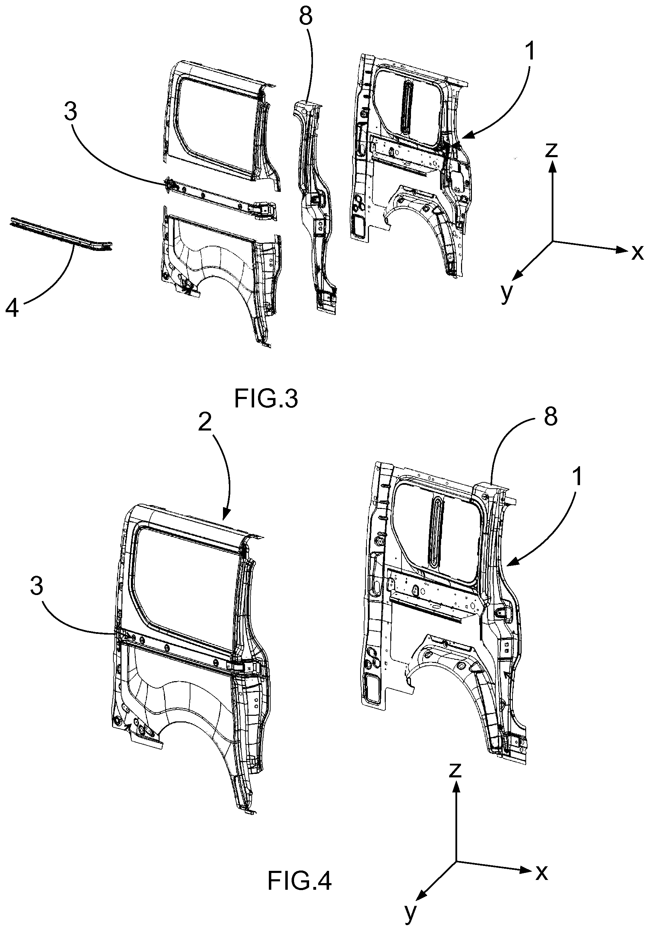

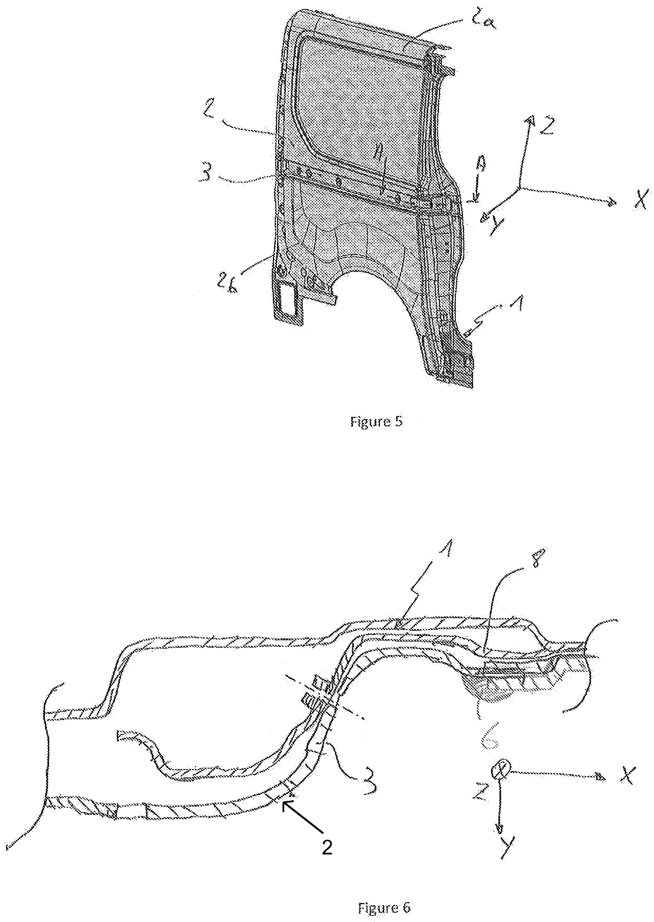

Les figures 3 à 8 permettent d'illustrer plus en détails le rail 4, le logement 3, la doublure latérale 1 de caisse et la peau latérale 2 de caisse.

Par « doublure latérale 1 de caisse », on entend un élément de structure destiné à permettre l'assemblage d'agrément délimitant l'intérieur du véhicule, cette doublure s'étend généralement sur un flanc latéral du véhicule entre sa partie arrière et sa partie avant. En fait, la doublure latérale de caisse peur être fixée au châssis du véhicule de sorte à délimiter en partie l'habitacle du véhicule. Elle peut être en une ou plusieurs parties.

Par « peau latérale 2 de caisse », on entend un élément de design et de structure destiné à permettre l'assemblage de la carrosserie extérieure du véhicule, cette peau latérale 2 de caisse s'étend généralement sur un flanc latéral du véhicule entre sa partie arrière et sa partie avant. Elle recouvre notamment la doublure latérale 1 de caisse. Elle peut être en une ou plusieurs parties.

En particulier, sur les figures 3 à 8, le repère X, Y, Z permet de mieux comprendre le positionnement de l'agencement par rapport au véhicule tout en sachant que l'axe X est orienté de l'arrière vers l'avant du véhicule, que l'axe Y est un axe transversal au véhicule et que l'axe Z est un axe vertical par rapport au véhicule. Bien entendu, les axes X, Y et Z sont définis lorsque le véhicule repose sur ses roues dans une configuration de roulage, le plan défini par les axes X et Y étant sensiblement parallèle à la route sur laquelle repose le véhicule via ses roues.

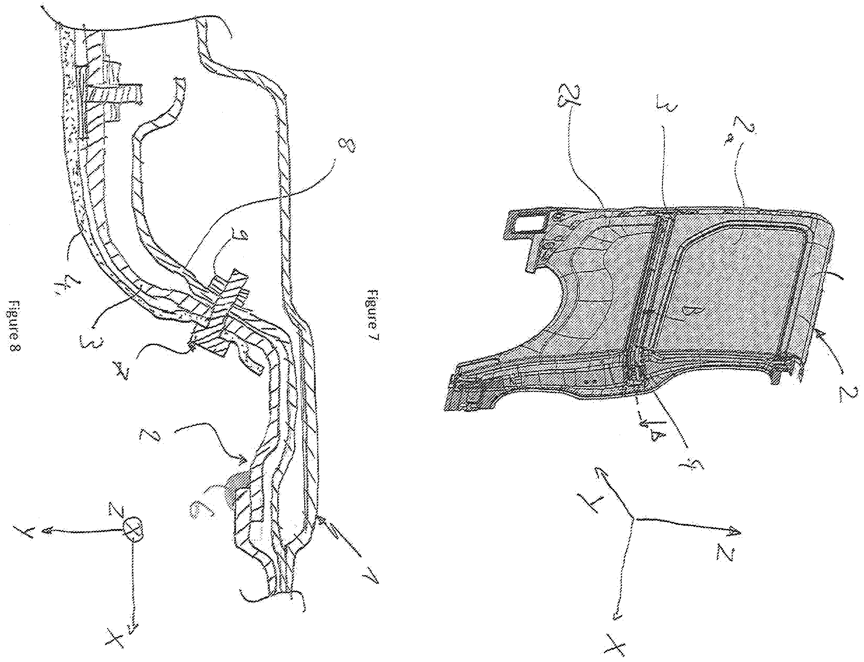

Avantageusement, comme permet de visualiser en particulier les figures 3, 4, 6 et 8, la doublure latérale 1 de caisse comporte un renfort de pied arrière 8 du véhicule, ledit organe de fixation 7 (figure 8) coopérant avec le renfort de pied arrière 8 pour assurer la fixation dudit logement 3.

Par « renfort de pied arrière », on entend un élément allongé selon une direction sensiblement verticale en Z. Ce renfort de pied arrière permet de conférer une meilleure résistance lors de chocs latéraux au véhicule, notamment en cas d'accident en vue de protéger les passagers du véhicule. Notamment, le renfort de pied arrière forme avec une partie de la doublure latérale 1 de caisse un corps creux. Le renfort de pied est dit arrière car il est disposé à l'interface d'une ouverture du véhicule, ladite ouverture étant destinée à être obturée en configuration de fermeture de la porte latérale coulissante, la plus proche de l'arrière du véhicule.

Afin d'assurer une meilleure reprise des efforts dus au porte à faux, l'organe de fixation 7 coopère à la fois avec le rail 4, le logement 3, et le renfort de pied arrière 8 de la doublure latérale 1 de caisse. En ce sens, l'organe de fixation 7 traverse une première ouverture formée dans le rail 4, une deuxième ouverture formée dans un fond du logement 3 et une troisième ouverture formée dans la doublure latérale 1 de caisse, notamment dans le renfort de pied arrière 8.

De manière plus générale, on comprend que l'agencement utilise le point de fixation du rail 4 au logement 3 pour concomitamment fixer le logement 3 à la doublure latérale 1 de caisse (au renfort de pied arrière 8 de la doublure latérale 1 de caisse) et le rail 4 au logement 3. Ceci permet de réaliser deux fonctions (fixation rail et fixation logement) avec un même organe de fixation 7. Il en résulte que le nombre de pièces est diminué, et donc que les coûts de fabrication le sont aussi.

Par exemple, l'organe de fixation 7 peut être un boulon assurant un serrage concomitant du rail 4, du logement 3 de la peau latérale 2 de caisse et de la doublure latérale 1 de caisse au niveau des première, deuxième et troisième ouvertures. Le boulon peut comporter un écrou 9 soudé sur une face de la doublure latérale 1 de caisse (avantageusement sur une face du renfort de pied arrière 8) opposée à la peau latérale 2 de caisse (plus particulièrement opposée au logement 3). Le fait que l'écrou 9 soit soudé à la doublure latérale 1 de caisse (ou le renfort de pied arrière 8) permet de faciliter l'installation de la vis du boulon et sa coopération avec l'écrou 9 surtout lorsque la zone où se situe l'écrou 9 est difficile d'accès voir d'accès impossible (l'écrou 9 peut alors se situer dans le corps creux visé ci-avant).

On a compris de ce qui a été dit ci-avant que la peau latérale 2 de caisse est plus fragile au niveau des extrémités du rail et en particulier au niveau de l'extrémité du rail 4 qui est la plus proche de l'ouverture destinée à être obturée par la porte latérale dans sa configuration de fermeture. Ainsi, l'organe de fixation est avantageusement disposé au niveau d'une extrémité du logement ou du rail qui se trouve la plus proche de l'ouverture destinée à être obturée par la porte latérale dans sa configuration de fermeture, notamment au niveau d'une extrémité du logement ou du rail en regard de la porte latérale lorsque cette dernière occupe la configuration de fermeture.

Selon une mise en œuvre particulière, illustrée aux figures 2, 3, 4, 5, 7, la peau latérale 2 de caisse comporte une partie inférieure 2b et une partie supérieure 2a séparées par le logement 3 du rail 4. De préférence, le logement 3 du rail 4 est solidaire respectivement des parties inférieure et supérieure par l'intermédiaire d'un élément de liaison tel qu'une soudure et/ou au moins un rivet. Un joint de mastic 6 peut être prévu aux endroits où le logement est fixé à des éléments adjacents.

Bien qu'il ait été décrit l'utilisation d'un boulon en tant qu'organe de fixation, ce dernier peut être remplacé par un rivet ou encore par des points de soudure fixant le logement 3 à la doublure latérale 1 de caisse. La solution du boulon sera préférée car elle est la moins onéreuse et car elle est moins contraignante en termes d'architecture.

Il va de soit que la présente invention est aussi relative à un véhicule automobile comprenant un agencement tel que décrit. On comprend aussi qu'un tel véhicule comporte avantageusement une porte latérale coulissante, préférentiellement munie d'un ou plusieurs galets configurés de sorte à coopérer avec le rail pour assurer un guidage de la porte latérale coulissante lorsque cette dernière varie entre sa position d'ouverture et sa position de fermeture.

Par ailleurs, dans le cadre du véhicule, l'agencement comporte avantageusement une interface avec l'arrière du véhicule et s'étend en direction de l'avant du véhicule de sorte que le rail 4 soit allongé selon la direction longitudinale X du véhicule.

Le véhicule peut être un véhicule utilitaire ou pour particulier équipé de l'agencement tel que décrit.

En augmentant la raideur du logement en le fixant à la doublure latérale de caisse, la résistance aux chocs provoqués lorsque la porte coulissante arrive en butée d'ouverture et/ou de fermeture et la résistance aux problématiques liées au porte à faux ont été améliorées.

## Revendications

1. Agencement pour véhicule automobile destiné à permettre le coulissement d'une porte latérale (5) du véhicule, ledit agencement comportant :
- un rail (4) destiné au guidage du coulissement de la porte latérale (5) du véhicule,
- une doublure latérale (1) de caisse,
- une peau latérale (2) de caisse montée sur la doublure latérale de caisse et munie d'un logement (3) dans lequel le rail (4) est monté,
l'agencement comportant un organe de fixation (7) du logement (3) sur la doublure latérale (1) de caisse, l'organe de fixation (7) coopérant à la fois avec le rail (4), le logement (3), et la doublure latérale (1) de caisse,
**caractérisé en ce que** la doublure latérale (1) de caisse comporte un renfort de pied arrière (8) du véhicule, ledit organe de fixation (7) coopérant avec le renfort de pied arrière (8) pour assurer la fixation dudit logement (3), et **en ce que** l'organe de fixation (7) traverse une première ouverture formée dans le rail (4), une deuxième ouverture formée dans un fond du logement (3) et une troisième ouverture formée dans le renfort de pied arrière (8).

2. Agencement selon la revendication 1, **caractérisé en ce que** l'organe de fixation (7) comporte un boulon assurant un serrage concomitant du rail (4), du logement (3) et de la doublure latérale (2) de caisse au niveau des première, deuxième et troisième ouvertures.

3. Agencement selon la revendication 2, **caractérisé en ce que** le boulon comporte un écrou (9) soudé sur une face de la doublure latérale (1) de caisse opposée à la peau latérale (2) de caisse.

4. Agencement selon l'une quelconque des revendications précédentes, **caractérisé en ce que** l'organe de fixation (7) est disposé au niveau d'une extrémité du logement (3) ou du rail (4) qui se trouve la plus proche d'une ouverture destinée à être obturée par la porte latérale (5) dans sa configuration de fermeture.

5. Agencement selon l'une quelconque des revendications précédentes, **caractérisé en ce que**, la peau latérale (2) de caisse comportant une partie inférieure (2b) et une partie supérieure (2a) séparées par le logement (3) du rail (4), le logement (3) du rail (4) est solidaire respectivement des parties inférieure (2b) et supérieure (2a) par l'intermédiaire d'un élément de liaison.

6. Véhicule automobile comprenant un agencement selon l'une quelconque des revendications précédentes.

7. Véhicule selon la revendication précédente, **caractérisé en ce que** l'agencement comporte une interface avec l'arrière du véhicule et s'étend en direction de l'avant du véhicule de sorte que le rail (4) soit allongé selon la direction longitudinale du véhicule.

## Patentansprüche

1. Anordnung für ein Kraftfahrzeug zur Ermöglichung des Gleitens einer Seitentür (5) des Fahrzeugs, die Anordnung aufweisend:
- eine Schiene (4) zur Führung des Gleitens der Seitentür (5) des Fahrzeugs,
- eine seitliche Karosserieauskleidung (1),
- eine seitliche Karosseriehaut (2), die auf der seitlichen Karosserieauskleidung befestigt ist und mit einer Aufnahme (3) versehen ist, in der die Schiene (4) befestigt ist,
wobei die Anordnung ein Element zur Befestigung (7) der Aufnahme (3) auf der seitlichen Karosserieauskleidung (1) aufweist, wobei das Element zur Befestigung (7) zugleich mit der Schiene (4), der Aufnahme (3) und der seitlichen Karosserieauskleidung (1) zusammenwirkt,
**dadurch gekennzeichnet, dass** die seitliche Karosserieauskleidung (1) eine C-Säulen-Verstärkung (8) des Fahrzeugs aufweist, wobei das Element zur Befestigung (7) mit der C-Säulen-Verstärkung (8) zusammenwirkt, um die Befestigung der Aufnahme (3) zu gewährleisten, und dadurch, dass das Element zur Befestigung (7) eine erste Öffnung, die in der Schiene (4) ausgebildet ist, eine zweite Öffnung, die in einem Boden der Aufnahme (3) ausgebildet ist, und eine dritte Öffnung, die in der C-Säulen-Verstärkung (8) ausgebildet ist, durchquert.

2. Anordnung nach Anspruch 1, **dadurch gekennzeichnet, dass** das Element zur Befestigung (7) einen Bolzen aufweist, der ein gleichzeitiges Festziehen der Schiene (4), der Aufnahme (3) und der seitlichen Karosserieauskleidung (2) an der ersten, zweiten und dritten Öffnung gewährleistet.

3. Anordnung nach Anspruch 2, **dadurch gekennzeichnet, dass** der Bolzen eine Mutter (9) aufweist, die an eine Fläche der seitlichen Karosserieauskleidung (1) geschweißt ist, die der seitlichen Karosseriehaut (2) gegenüberliegt.

4. Anordnung nach einem der vorhergehenden Ansprüche, **dadurch gekennzeichnet, dass** das Element zur Befestigung (7) an einem Ende der Aufnahme (3) oder der Schiene (4) angeordnet ist, das einer Öffnung am nächsten liegt, die dazu bestimmt ist, durch die Seitentür (5) in deren Schließstellung verschlossen zu sein.

5. Anordnung nach einem der vorhergehenden Ansprüche, **dadurch gekennzeichnet, dass**, die seitliche Karosseriehaut (2) aufweisend einen unteren Abschnitt (2b) und einen oberen Abschnitt (2a), die durch die Aufnahme (3) der Schiene (4) getrennt sind, die Aufnahme (3) der Schiene (4) mittels eines Verbindungselements fest mit dem unteren Abschnitt (2b) bzw. dem oberen Abschnitt (2a) verbunden ist.

6. Kraftfahrzeug, umfassend eine Anordnung nach einem der vorhergehenden Ansprüche.

7. Fahrzeug nach dem vorhergehenden Anspruch, **dadurch gekennzeichnet, dass** die Anordnung eine Schnittstelle zum hinteren Teil des Fahrzeugs aufweist und sich in der Richtung vom vorderen Teil des Fahrzeugs erstreckt, so dass die Schiene (4) in der Längsrichtung des Fahrzeugs langgestreckt ist.

## Claims

1. Arrangement for a motor vehicle intended to allow the sliding of a side door (5) of the vehicle, said arrangement comprising:
- a rail (4) intended for guiding the sliding of the side door (5) of the vehicle,
- a bodyshell lateral lining (1),
- a bodyshell lateral skin (2) mounted on the bodyshell lateral lining and provided with a housing (3) in which the rail (4) is mounted,
the arrangement comprising a fixing member (7) for fixing the housing (3) to the bodyshell lateral lining (1), the fixing member (7) cooperating simultaneously with the rail (4), the housing (3) and the bodyshell lateral lining (1),
**characterized in that** the bodyshell lateral lining (1) comprises a vehicle rear-pillar reinforcement (8), said fixing member (7) cooperating with the rear-pillar reinforcement (8) in order to fix said housing (3), and **in that** the fixing member (7) passes through a first opening formed in the rail (4), a second opening formed in a bottom of the housing (3) and a third opening formed in the rear-pillar reinforcement (8).

2. Arrangement according to Claim 1, **characterized in that** the fixing member (7) comprises a bolt providing concomitant clamping of the rail (4), of the housing (3) and of the bodyshell lateral lining (2) at the first, second and third openings.

3. Arrangement according to Claim 2, **characterized in that** the bolt comprises a nut (9) welded to a face of the bodyshell lateral lining (1) that is opposed to the bodyshell lateral skin (2).

4. Arrangement according to any one of the preceding claims, **characterized in that** the fixing member (7) is arranged at an end of the housing (3) or of the rail (4) that is situated closest to an opening intended to be shut off by the side door (5) in its closed configuration.

5. Arrangement according to any one of the preceding claims, **characterized in that**, with the bodyshell lateral skin (2) comprising a lower portion (2b) and an upper portion (2a) separated by the housing (3) of the rail (4), the housing (3) of the rail (4) is respectively secured to the lower (2b) and upper (2a) portions via a connection element.

6. Motor vehicle comprising an arrangement according to any one of the preceding claims.

7. Vehicle according to the preceding claim, **characterized in that** the arrangement comprises an interface with the rear of the vehicle and extends in the direction of the front of the vehicle such that the rail (4) is elongated in the longitudinal direction of the vehicle.
